# EUROPEAN PATENT APPLICATION

(11) **EP 0 768 250 A1**
(43) Date of publication of application: **16.04.1997**
(21) Application number: 96200178.0
(22) Date of filing: 31.01.1996
(51) Int. Cl.: B65F 1/14, B65F 1/00, B65F 1/12

(54) **Waste container, receiving holder therefor and assembly of a waste container and receiving holder**

(30) Priority: 31.01.1995 NL 9500170
(71) Applicant: Bammens B.V., NL-3600 AA Maarssen (NL)
(72) Inventor: Pruijser, Johan Sebastiaan, NL-2133 BL Hoofddorp (NL)
(74) Representative: Land, Addick Adrianus Gosling

(57) **Abstract**

Waste container (1) comprising a collection tank (16) of relatively large dimensions for placing underground and one or more insertion units (3-8) for placing above ground which are provided in each case with an insertion opening (9) and which have considerably smaller dimensions than the collection tank.

Because a large collection tank is available underground an efficient filling of the waste container according to the present invention is achieved, while the whole waste container can be emptied in one operation.

## Description

Use is increasingly being made in the developed countries of collecting particular types of waste for recycling or re-use thereof, such as glass waste, vfg (vegetable, fruit and garden waste) and waste paper. As a result of intensive use such waste containers are quite often in danger of being full, thus discouraging the disposal of such waste.

A proposed solution to this problem is the placing of a very large waste container on the public highway, for instance for collecting used glassware. Such a large waste container may however not be too high because of the desired height of the insertion openings therein and must therefore cover a large surface area. The above problem is otherwise solved in practice by placing a large number of waste containers adjacently of each other, which is inefficient both in terms of the volume for filling and in terms of the determined number of operations which have to be performed for emptying thereof.

The present invention provides a waste container comprising a collection tank of relatively large dimensions for placing underground and one or more insertion units for placing above ground which are provided in each case with an insertion opening and which have considerably smaller dimensions than the collection tank.

Because a large collection tank is available underground an efficient filling of the waste container according to the present invention is achieved, while the whole waste container can be emptied in one operation.

The present invention further provides a receiving holder for receiving a waste container according to the present invention.

Further advantages, features and details of the present invention will be elucidated on the basis of the following description of preferred embodiments thereof with reference to the annexed drawings, in which:
figure 1 shows a partly broken away and exploded view in perspective of a first preferred embodiment of a waste container and a receiving holder according to the present invention; and

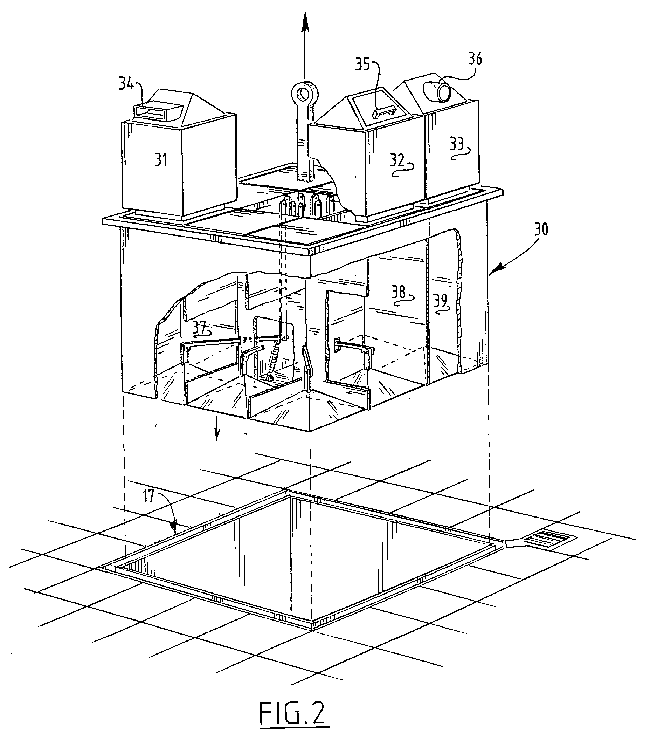

figure 2 shows a partly broken away view in perspective of a second preferred embodiment of a waste container according to the present invention which can be used with the receiving holder of figure 1.

A first preferred embodiment of a waste container 1 according to the present invention comprises an upper wall 2 on which are placed units 3, 4, 5, 6, 7 and 8 which are provided in each case with insertion openings 9 of particular shape, in the present case for instance round for insertion of round glassware. In the shown preferred embodiment units 3-8 have in each case a base of 50 x 50 cm² while the insertion opening is situated at about 70 cm above street level. The upper surface therefore has a dimension of roughly 1.5 x 1.5 m². Together with side walls 10, 11, 12 and 13 and hinged unloading flaps 14 and 15 a large collection compartment is thus formed to collect glass thrown into the insertion opening.

During use the waste container 1 is situated with its collection compartment 16 underground, preferably in a receiving holder 17 which consists of a base 18 and side walls 19, 20, 21 and 22, wherein the base preferably extends slightly beyond side walls 19 and 22 in order to fix receiving holder 17 in the ground and to prevent an upward force being exerted on receiving holder 17 by a high groundwater level. The receiving holder is preferably provided along the wall with a peripheral rainwater gutter 25 which debouches into a sink hole 26 for draining rainwater running down along units 3-8. If the glass thrown into insertion openings 9 collects in the collection tank 16, this latter requires emptying much less frequently than if only units 3-8 were to be placed in the street. Preferably situated centrally on the upper surface 2 is a removable cover 27 under which is located an engaging eye 28 in order to allow connection of a cable of a crane or the like. After lifting of the waste container the unloading flaps 14 and 15 are opened in a manner not shown and the glass collected in container 1 is unloaded onto for instance a goods vehicle which is preferably also provided with a crane device.

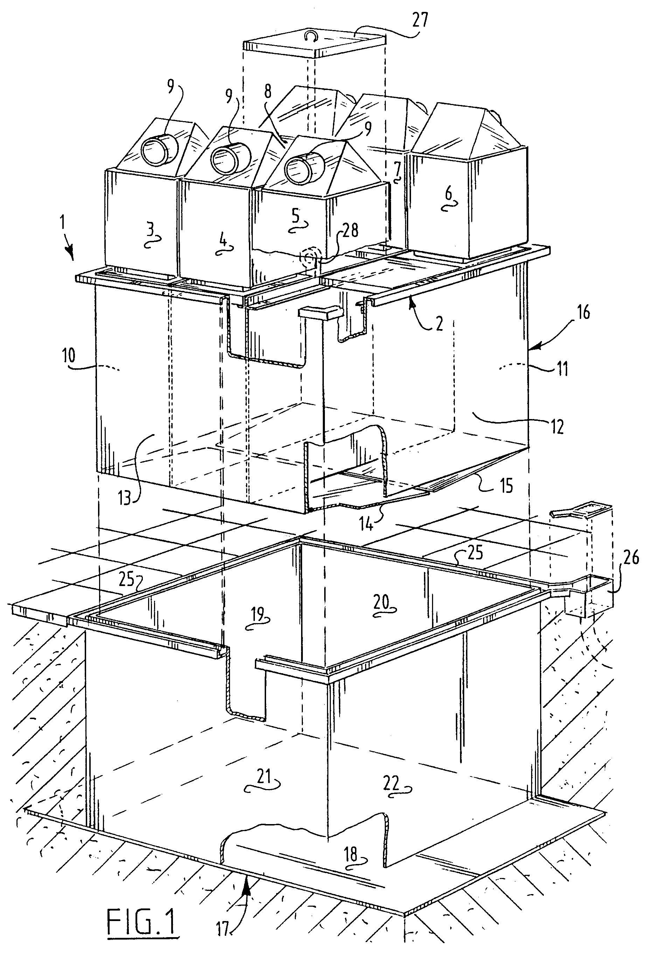

In a second preferred embodiment of the present invention a waste container 30 can be placed in the receiving holder 17, the details of which are otherwise shown in figure 1. Waste container 30 is provided with units 31, 32 and 33, and optionally more thereof, having in each case a different insertion opening 34, 35 respectively 36, wherein it is assumed known that the insertion opening 34 is intended for throwing in waste paper, the insertion opening 35 for throwing in vfg waste and insertion opening 36 for throwing in used glass. It is also conceivable for a unit to be available in a manner not shown for throwing in filled domestic refuse bags for other waste.

The units 31, 32 and 33 communicate with compartments 37, 38 and 39 which are provided with respective unloading flaps 40, 41 and 42 and associated operating mechanisms therefor for separate unloading of the relevant compartments, for instance above different goods vehicles, so that disposal of the separated collected waste also takes place individually. The above described preferred embodiment of the waste container as well as the receiving holder according to the present invention are preferably manufactured from steel plate. The receiving holder in particular can of course be manufactured equally well from concrete.

It is generally the case that the present invention is not limited by the above described preferred embodiments thereof; the rights applied for are defined by the following claims.

## Claims

1. Waste container comprising a collection tank of relatively large dimensions for placing underground and one or more insertion units for placing above ground which are provided in each case with an insertion opening and which have considerably smaller dimensions than the collection tank.

2. Waste container as claimed in claim 1, wherein the collection tank is sub-divided into different compartments by one or more partitions and wherein at least two insertion openings are placed on the upper surface of the collection tank, with a mutually differing form of the insertion opening for throwing in mutually differing types of waste.

3. Waste container as claimed in claim 1 or 2, wherein the base of an insertion unit covers roughly a ninth part of the upper surface of the collection tank.

4. Waste container as claimed in claim 1, 2 or 3, wherein the collection tank has an upper surface area of 0.50 x 1.50 m² and a depth of 1.50 m and the insertion units have in each case a base of 50 x 50 cm².

5. Waste container as claimed in any of the claims 1-4, wherein the device is provided with at least one engaging member for allowing engagement of a lifting means, and the collection tank is provided on the underside with one or more unloading flaps for emptying thereof, respectively of compartments thereof.

6. Receiving holder for receiving a waste container comprising a base and a number of standing walls, having the same form as the collection tank of the waste container.

7. Receiving holder as claimed in claim 6, provided with fixing parts which extend from the base in sideways direction relative thereto.

8. Receiving holder as claimed in claim 6 or 7, provided with rainwater draining means for draining rainwater which comes to lie on the upper wall of the collection tank and/or runs downs from the insertion units.

9. Assembly of a waste container as claimed in any of the claims 1-5 and a receiving holder as claimed in claim 6, 7 or 8.
